# EUROPÄISCHE PATENTSCHRIFT

(11) **EP 3 456 613 B1**
(45) Veröffentlichungstag und Bekanntmachung des Hinweises auf die Patenterteilung: **30.10.2019**
(21) Anmeldenummer: 17190863.5
(22) Anmeldetag: 13.09.2017
(51) Int. Cl.: B62H 1/00, B62H 1/02, B62H 5/00

(54) **MOBILE SICHERHEITS- UND STANDVORRICHTUNG FÜR ZWEIRÄDER**
MOBILE SECURITY AND STAND DEVICE FOR TWO-WHEELED VEHICLES
DISPOSITIF MOBILE DE SÉCURITÉ ET DE SUPPORT POUR VÉHICULE À DEUX ROUES

(43) Veröffentlichungstag der Anmeldung: 20.03.2019
(73) Patentinhaber: Roth, Thorsten, 44791 Bochum (DE)
(72) Erfinder: Roth, Thorsten, 44791 Bochum (DE)
(74) Vertreter: Gille Hrabal

(56) Entgegenhaltungen:
- DE-U1-202012 100 038
- FR-A- 1 002 566

## Beschreibung

Die Erfindung beschreibt einen verbesserten Zweiradständer, der auch als Diebstahlschutz dient.

### Einleitung und Stand der Technik

Zweiradständer sind Teil eines Zweirads bzw. können an einem solchen bei Bedarf angebracht werden und sollen das Umfallen des Zweirads im Stand, insbesondere in Parkposition, verhindern. Der derzeitige Stand der Technik betrachtet Zweiradständer zumeist losgelöst vom Diebstahlschutz.

Die Gebrauchsmuster DE 29513869 U und DE 202006009295 U beschreiben einen längenverstellbaren Ständer, der es ermöglicht, ein Zweirad auch auf nicht horizontalen Flächen sicher abzustellen. Offensichtlich sind Alternativen zu einem solchen zeitaufwändigen Verstellen der Länge des Ständers zum sicheren Abstellen jedoch von Interesse.

Die Druckschrift FR 1 002 566 A offenbart die Präambel des Anspruchs 1 und beschreibt einen Zweiradständer, welcher bei Kontaktierung mit dem Boden und anschließender Unterdruckerzeugung an der Zwischenfläche diese miteinander verbindet.

Diverse Dokumente des Standes der Technik behandeln den Diebstahlschutz, der durch Zweiradständer ermöglicht wird. Beispielsweise behandeln DE 3715882 A und WO 2015/008283 A einen Motorradständer, der auch als Diebstahlsicherung dient. Der dort beschriebene Motorradständer kann dabei lediglich durch Benutzung des Zündschlüssels eingeklappt werden. Das bedeutet, dass bei ausgeklapptem Ständer das Motorrad nicht einfach schiebend entwendet werden kann. Analog hierzu beschreibt der Stand der Technik DE 3211367 A und EP 1 388 489 A ein Zweirad, insbesondere ein Fahrrad, mit einem Ständer, wobei sich der Ständer in der Parkposition abschließen lässt.

Die solcherart fixierten Zweiradständer verhindern zwar, dass das Zweirad unautorisiert weggefahren bzw. geschoben wird, es ist allerdings weiterhin möglich das Zweirad tragend zu bewegen, was insbesondere bei leichten Zweirädern, wie beispielsweise Fahrrädern, problemlos möglich ist. Auch wird bei diesen Zweiradständern keine Verbesserung der Standeigenschaften erreicht.

Aufgabe der Erfindung ist es einen Zweiradständer mit verbesserten Standeigenschaften bereitzustellen, der zusätzlich zur Diebstahlsicherung beiträgt. Ein erfindungsgemäßer Zweiradständer soll möglichst effektiv und einfach im Alltag anwendbar sowie kostengünstig herstellbar sein. Außerdem sollte ein Einbau in existierende Zweiräder einfach zu bewerkstelligen sein. Die Standeigenschaften von Zweirädern, welche den erfindungsgemäßen Zweiradständer verwenden, soll verbessert werden. Außerdem soll der erfindungsgemäße Zweiradständer zusätzlich als Diebstahlschutz für das Zweirad fungieren.

Dies wird durch den Zweiradständer der vorliegenden Erfindung erreicht.

Der Zweiradständer der vorliegenden Erfindung weist mindestens einen mindestens eine Aushöhlung 9 aufweisenden Fuß 6 auf, wobei durch Kontaktierung dieses Fußes 6 mit einer Fläche diese mindestens eine Aushöhlung 9 zusammen mit der Fläche mindestens einen Hohlraum bildet, wobei in mindestens einem dieser Hohlräume ein Unterdruck aufgebaut und abgebaut werden kann.. Der Zweiradständer ist dann dadurch gekennzeichnet, dass das Abbauen des Unterdrucks und/oder das Aufbauen des Unterdrucks eine Verifizierung erfordert.

Der mindestens eine Fuß 6 des Zweiradständers ist dabei vorzugsweise aus einem flexiblen Material, wie Gummi und / oder flexiblem Silikon, welches sich bei Unterdruck an der Fläche "festsaugt", gefertigt. Entsprechende Materialien sind dem Fachmann bekannt.

Auf Grund dieses "Festsaugens" wird auch der Begriff "Saugfuß" für diesen Fuß verwendet. Die Begriffe "Fuß" 6 und "Saugfuß" 6 werden dabei synonym verwendet und beschreiben den Teil des Zweiradständers, der die Fläche kontaktiert.

Der Fuß 6 ist dabei ein Teil des Zweiradständers, vorzugsweise jedoch zusätzlich unabhängig von diesem beweglich. Dies ermöglicht eine sichere Fixierung des Zweirads auf unebenen und/oder geneigten Flächen.

Bei der erfindungsgemäßen Fläche handelt es sich im Normalfall um den Boden, auf welchem der Zweiradständer mit mindestens einem Fuß steht. Es kann sich aber auch um andere Flächen, wie beispielsweise um eine Wand, handeln.

Vorzugsweise weist der erfindungsgemäße Zweiradständer ausgehend von dem Fuß 6 eine Hohlleitung 2 auf, welche den Saugfuß 6 mit einem Ventil verbindet, wobei über diese Verbindung der Unterdruck ab- bzw. aufgebaut werden kann.

In einer Ausführungsform ist der erfindungsgemäße Zweiradständer an einem Zweirad befestigt.

Mögliche Techniken zur Befestigung des Zweiradständers an ein Zweirad sind dem Fachmann bekannt und umfassen beispielsweise Klebverbindungen, Schweißverbindungen und Schraubverbindungen.

Zweiräder im Sinne der Erfindung umfassen unmotorisierte Zweiräder, beispielsweise Fahrräder, und motorisierte Zweiräder, beispielsweise Motorräder, Mopeds, Motorroller, aber auch motorisierte Fahrräder.

Fahrräder im Sinne der Erfindung umfassen unmotorisierte Fahrräder und motorisierte Fahrräder. Motorisierte Fahrräder meint dabei solche mit einem (zusätzlichem) Elektroantrieb. Beispiele hierfür sind E-Bikes und Pedelecs bzw. S-Pedelecs.

Sofern ein Unterdruck in mindestens einem der Hohlräume des Zweiradständers vorliegt, weist das Zweirad mit dem erfindungsgemäßen Zweiradständer in Parkposition eine erhöhte Standfestigkeit auf, da der Unterdruck den Fuß 6 und damit den Zweiradständer und das Zweirad an die Fläche "festsaugt".

Erfindungsgemäß bedeutet "Parkposition" bzw. "parken" bzw. "Parkmodus", dass das Zweirad mit ausgefahrenem Zweiradständer an einem Ort steht, wobei der Fuß 6 des Zweiradständers eine Fläche kontaktiert.

Vorzugsweise können erfindungsgemäße Zweiradständer, welche sich an einem Zweirad befinden, analog zu herkömmlichen Zweiradständern ausgefahren bzw. ausgeklappt oder eingefahren bzw. eingeklappt sein und/oder werden. Im ausgefahrenen Zustand unterstützt ein Zweiradständer die Standfähigkeit des verbundenen Zweirads im Parkmodus durch Kontaktierung einer Fläche wie dem Boden. Im eingeklappten Zustand wird keine Fläche (bzw. maximal eine Fläche am Zweirad) kontaktiert, sodass das Zweirad bewegt bzw. gefahren werden kann. Dementsprechend weist der Zweiradständer beispielsweise ein Kugelgelenk (3) zum Ein- bzw. Ausklappen des Zweiradständers, welcher mit einem Zweirad verbunden ist, auf.

Zweiradständer im Sinne der Erfindung umfassen dem Fachmann geläufige Zweiradständer wie beispielsweise Seiten- und Hinterbauständer. Sowohl Einbein- als auch Zweibeinständer sind Zweiradständer im Sinne der Erfindung.

Bei Verwendung von Zweibeinständern oder mehreren Ständern bzw. Ständern mit mehreren Füßen kann ein Unterdruck in lediglich einem dieser Füße, aber auch in mehreren bzw. allen erzeugt werden.

Zusätzlich zur erhöhten Standfestigkeit wird durch das "Festsaugen" des Zweiradständers an einer Fläche ein unbefugtes Bewegen des Zweirads verhindert, womit der Zweiradständer auch als Diebstahlsicherung des Zweirads dient.

Wenn beispielsweise ein erfindungsgemäßer Zweiradständer, der mit einem Zweirad verbunden ist, Bodenkontakt aufweist (das zugehörige Zweirad also parkt), kann der mindestens eine Hohlraum des Saugfußes evakuiert werden, sodass ein Unterdruck in diesem mindestens einem Hohlraum herrscht. Eine entsprechende Stärke des Unterdrucks (bzw. die Höhe der Druckdifferenz) verhindert dabei sowohl das unrechtmäßige (Diebstahl), als auch das ungewollte ("Umkippen") Bewegen des Zweirads.

Erfindungsgemäß bedeutet Evakuieren die Erzeugung eines Unterdrucks, also eines Drucks, der geringer als der Umgebungsdruck ist.

Der erfindungsgemäße Zweiradständer kann eine Druckanzeige aufweisen, welche die Stärke des Unterdrucks im Saugfuß 6 anzeigt. Eine solche Druckanzeige kann sich auch bzw. stattdessen am Zweirad befinden.

Der Abbau des Unterdrucks und/oder der Aufbau des Unterdrucks des erfindungsgemäßen Zweiradständers erfordert eine Verifizierung.

Durch eine Verifizierung soll verhindert werden, dass der Unterdruck auf unbefugte Weise abgebaut werden kann, da ein solcher unbefugter Druckausgleich die erhöhte Standfestigkeit und die Diebstahlsicherung des erfindungsgemäßen Zweiradständers bzw. des verbundenen Zweirads, ungewollt aufheben würde.

Erfindungsgemäß bedeutet Druckausgleich eine Angleichung des Druckes im Fuß an den Umgebungsdruck.

Diese Verifizierung soll sicherstellen, dass lediglich die berechtigte Person(en) den Druckausgleich initiieren und somit das Zweirad aus der Parkposition lösen kann. Eine solche Verifizierung kann beispielsweise analog oder digital erfolgen. Bei erfolgreicher Verifizierung kann beispielsweise anschließend ein Ventil geöffnet werden bzw. öffnet sich ein Ventil, wodurch Umgebungsatmosphäre in den mindestens einen Hohlraum des Fußes fließt und ein Druckausgleich stattfindet.

Beispiele der analogen Verifizierung umfassen die Verwendung eines Schlüssels oder eines Zahlencodes. Beispiele einer digitalen Verifizierung umfassen die Verwendung einer "App" oder einer Funkfernbedienung.

Die Verwendung einer "App" meint dabei die digitale Verifizierung mittels eines Programms auf einem tragbaren Computer, wie einem Smartphone, welches ein entsprechendes Verifizierungssignal sendet.

Insbesondere bei Verwendung einer analogen Verifizierung wird vorzugsweise ein Stellmotor mit Empfangsvorrichtung - beispielsweise einer Antenne - an ein Ventil angeschlossen. Insbesondere bei Verwendung von Zweirädern mit elektrischen Komponenten bzw. einem Verbrennungsmotor kann die hierzu benötigte Energie von diesen Komponenten bezogen werden. Alternativ und/oder Additiv und/oder zur Absicherung kann beispielsweise eine Batterie dienen, die beispielsweise bei Verwendung eines Fahrrads als Zweirad durch das Treten der Pedale während der normalen Fortbewegung aufgeladen werden kann.

Vorzugsweise erfolgt die analoge Verifizierung dabei durch ein codiertes (Funk)signal.

In einer bevorzugten Ausführungsform erfolgt die Verifizierung per Signal eines mobilen Geräts, wie einem Smartphone, über eine "App".

In einer Ausführungsform weist der erfindungsgemäße Zweiradständer eine Vorrichtung zum manuellen Erzeugen des Unterdrucks auf.

Die manuelle Erzeugung des Unterdrucks kann beispielsweise mittels einer Drucktritt-Fläche 7 erfolgen. Im Parkmodus bewirkt eine Kraftauswirkung auf diese Drucktritt-Fläche 7 in Richtung der Fläche eine Kontraktion des mindestens einen Hohlraums im mindestens einen Fuß 6 des Zweiradständers. Bei Entfernung dieser Kraftauswirkung erfolgt die Ausdehnung dieses mindestens einen Hohlraums. Wenn nun beispielsweise ein entsprechend konfiguriertes Ventil mit dem Fuß verbunden ist, kann bei Kontraktion des Hohlraums Luft entweichen, bei der anschließenden Ausdehnung des Hohlraums jedoch keine Luft zurückströmen, wodurch ein Unterdruck im Fuß entsteht.

Auch eine integrierte manuelle Pumpe zur Erzeugung eines Unterdrucks ist denkbar.

In einer Ausführungsform wird der Unterdruck automatisiert erzeugt.

Additiv bzw. Alternativ zu der beschriebenen manuellen Unterdruckerzeugung können auch weitere Methoden zur Evakuierung verwendet werden. Beispielsweise mit einer automatisiert betriebenen Pumpe. Insbesondere bei Verwendung von Zweirädern mit elektrischen Komponenten bzw. einem Verbrennungsmotor kann die automatisiert betriebene Pumpe Ihre Energie von diesen Komponenten beziehen. Alternativ und/oder Additiv und/oder zur Absicherung einer solchen Pumpe kann beispielsweise eine Batterie dienen. Eine solche Batterie kann, beispielsweise bei Verwendung eines Fahrrads als Zweirad, durch das Treten der Pedale während der normalen Fortbewegung aufgeladen werden.

Die Verifizierung zum Aufbau des Unterdrucks kann analog zur bereits beschriebenen Verifizierung zum Abbau des Unterdrucks erfolgen. Eine erfolgreiche Verifizierung kann dabei beispielsweise ein Ventil schließen, wodurch ein Druckausgleich eines eventuell entstehenden bzw. vorhandenen Unterdrucks in den mindestens einen Hohlraum des Fußes 6 mit der Umgebung verhindert wird.

Auch diese Verifizierung zum Aufbau des Unterdruckes erfolgt bevorzugt über eine "App", welche beispielsweise mittels Smartphone ausgeführt wird.

In einer Ausführungsform weist der mindestens eine Fuß 6 des Ständers mindestens zwei Aushöhlungen auf.

Vorzugsweise ist der Fuß mindestens in eine äußere Aushöhlung 10 und mindestens eine innere Aushöhlung 11 unterteilt, wobei die mindestens eine äußere Aushöhlung 10 die mindestens eine innere Aushöhlung 11 vorzugsweise umschließt. Bei Kontaktierung mit einer Fläche liegen dann mindestens ein äußerer Hohlraum und mindestens ein innerer Hohlraum vor, wobei der mindestens eine äußere Hohlraum den mindestens einen inneren Hohlraum vorzugsweise umschließt.

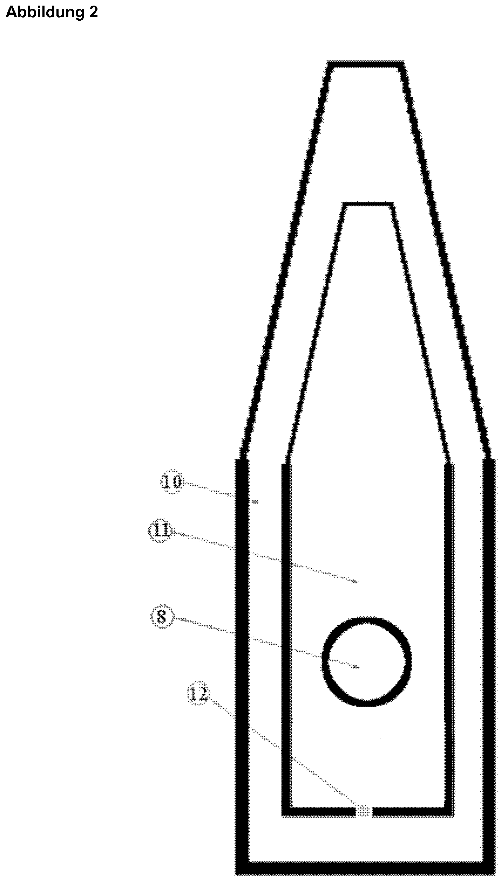

Der mindestens eine äußere Hohlraum ist dabei vorzugsweise vom mindestens einen inneren Hohlraum getrennt, bzw. lediglich über ein Ventil 12 o.ä. verbunden. Dieses Ventil 12 ist dabei so gestaltet, dass bei Druckausgleich zwischen dem mindestens einen äußeren Hohlraum und der Umgebung kein Druckausgleich zwischen diesem äußeren Hohlraum und dem mindestens einen inneren Hohlraum erfolgt, wohingegen bei Evakuierung des mindestens einen inneren Hohlraums der mindestens eine äußere Hohlraum auch evakuiert wird. Alternativ kann die Evakuierung und/oder der Druckausgleich der verschiedenen Hohlräume auch separat erfolgen. Abbildung 2 zeigt eine entsprechende Ausführungsform.

Ein solcher Aufbau hat den Effekt, dass beispielsweise bei Beschädigung des Materials im Bereich des äußeren Hohlraums und der Umgebung bzw. bei einem sonstigen Grund für einen Druckausgleich des mindestens einen äußeren Hohlraums (beispielsweise bei dem Versuch eines Diebstahls durch den Versuch des Aufbrechens des Hohlraums) mit der Umgebung die anderen, d.h. innenliegende Hohlräume weiterhin einen Unterdruck aufrechthalten.

Wenn beispielsweise ein Unbefugter den mindestens einen äußeren Hohlraum beschädigt, um einen Druckausgleich zu erzwingen bzw. versucht den Saugfuß 6 anzuheben um dadurch den Unterdruck auszugleichen, so bewirkt dies lediglich den Druckausgleich des mindestens einen äußeren Hohlraum und der Unterdruck in den weiteren, d.h. innenliegenden bzw. nicht betroffenen weiteren äußeren Hohlräumen bleibt bestehen, wodurch ein unberechtigtes Bewegen des Zweirads weiterhin verhindert wird.

### Abbildung 1

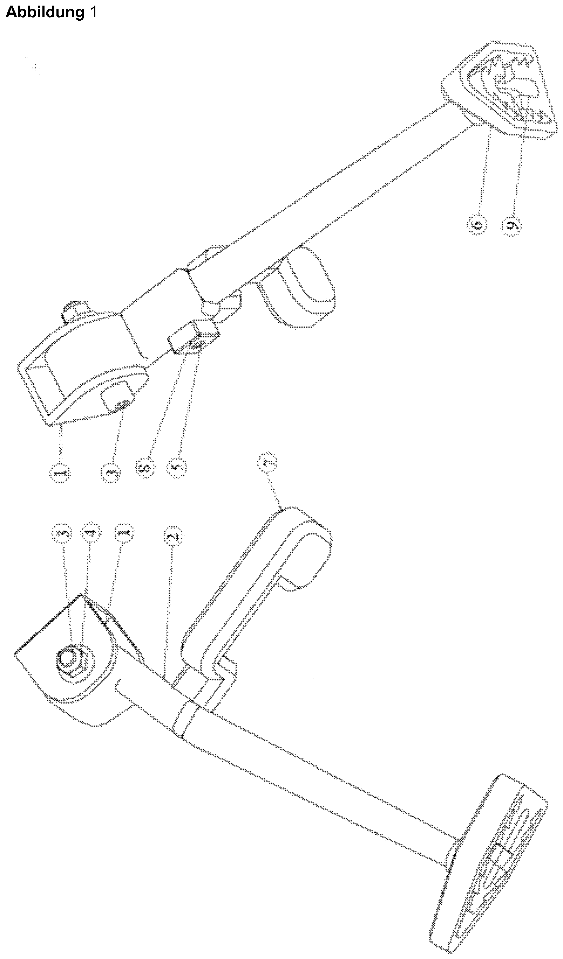

Die Abbildung 1 zeigt schematische Darstellungen eines erfindungsgemäßen Zweiradständers aus zwei verschiedenen Blickwinkeln. Gezeigt sind eine Befestigungsfläche 1 und eine Verbindungsschraube 4 zur Befestigung des Zweiradständers an ein Zweirad. Der Ständer mit Hohlleitung 2, welcher den Saugfuß 6 mit der Eintrittsöffnung der Hohlleitung 8 verbindet. An dieser Eintrittsöffnung 8 befindet sich ein Ventil-Modul mit Antenne 5, welche durch eine Handy-App angesteuert werden können. Der Saugfuß 6 weist Aushöhlungen 9 auf, die, beispielsweise bei der Verbindung des Saugfußes 6 mit dem Boden, Hohlräume bilden. Des Weiteren zeigt die Abbildung ein Kugelgelenk 3, welches es ermöglicht den Zweiradständer (bei Verbindung mit einem Zweirad) ein- und auszuklappen. Die Abbildung zeigt auch eine Drucktritt-Fläche 7, die es ermöglicht manuell einen Unterdruck im Saugfuß 6 herzustellen.

### Abbildung 2

Die Abbildung 2 zeigt die schematische Darstellung eines Saugfußes 6 eines erfindungsgemäßen Zweiradständers von "unten". Von "unten" meint hiermit (in Bezug zu Abbildung 1) entlang der Blickrichtung vom Saugfuß 6 zur Befestigungsfläche 1. Die Abbildung 2 zeigt eine äußere Aushöhlung 10 und eine innere Aushöhlung 11, wobei die äußere Aushöhlung 10 die innere Aushöhlung 11 vollständig umfasst. Diese beiden Aushöhlungen 10 und 11 sind dabei lediglich durch ein Ventil 12 miteinander verbunden. In der inneren Aushöhlung 11 befindet sich außerdem die Eintrittsöffnung-Hohlleitung 8, welche das Evakuieren bzw. den Druckausgleich des inneren und äußeren Hohlraums ermöglicht.

### Bezugszeichenliste

- 1:: Befestigungsfläche
- 2:: Ständer mit Hohlleitung
- 3:: Kugelgelenk
- 4:: Verbindungsschraube
- 5:: Ventil-Modul mit Antenne
- 6:: Saugfuß
- 7:: Drucktritt-Fläche
- 8:: Eintrittsöffnung-Hohlleitung
- 9:: Aushöhlung
- 10:: äußere Aushöhlung
- 11:: innere Aushöhlung
- 12:: Ventil

## Patentansprüche

1. Zweiradständer mit mindestens einen mindestens eine Aushöhlung (9) aufweisenden Fuß (6), wobei durch Kontaktierung dieses Fußes (6) mit einer Fläche diese mindestens eine Aushöhlung (9) mit der Fläche mindestens einen Hohlraum bildet, wobei in mindestens einem dieser Hohlräume ein Unterdruck aufgebaut und abgebaut werden kann, **dadurch gekennzeichnet, dass** das Abbauen des Unterdrucks und/oder das Aufbauen des Unterdrucks eine Verifizierung erfordert, wobei die Verifizierung ein unbefugtes Aufbauen beziehungsweise Abbauen des Unterdrucks verhindert.

2. Zweiradständer nach Anspruch 1, **dadurch gekennzeichnet, dass** der Zweiradständer an einem Zweirad befestigt ist.

3. Zweiradständer nach einem der Ansprüche 1 oder 2, **dadurch gekennzeichnet, dass** der Zweiradständer eine Vorrichtung zum manuellen Erzeugen des Unterdrucks aufweist.

4. Zweiradständer nach einem der Ansprüche 1 bis 3, **dadurch gekennzeichnet, dass** der Unterdruck automatisiert aufgebaut wird.

5. Zweiradständer nach einem der Ansprüche 1 bis 4, **dadurch gekennzeichnet, dass** es sich bei dem Zweirad um ein Fahrrad handelt.

6. Zweiradständer nach Anspruch 1 bis 5, **dadurch gekennzeichnet, dass** der mindestens eine Fuß (6) des Zweiradständers mindestens zwei Aushöhlungen aufweist.

## Claims

1. A two-wheeler stand comprising at least one base (6) comprising at least one cavity (9), wherein if this base (6) is brought into contact with a surface, this at least one cavity (9) will form at least one hollow space with the surface, wherein a negative pressure can be built up or released in at least one of these hollow spaces, **characterized in that** the releasing of the negative pressure and/or the building up of the negative pressure requires a verification, wherein the verification prevents an unauthorized building up or releasing of the negative pressure.

2. A two-wheeler stand according to claim 1, **characterized in that** the two-wheeler stand is fixed on a two-wheeler.

3. A two-wheeler stand according to one of the claims 1 or 2, **characterized in that** the two-wheeler stand comprises a device for manually generating the negative pressure.

4. A two-wheeler stand according to one of the claims 1 through 3, **characterized in that** the negative pressure will be automatically built up.

5. A two-wheeler stand according to one of the claims 1 through 4, **characterized in that** the two-wheeler is a bicycle.

6. A two-wheeler stand according to claim 1 through 5, **characterized in that** the at least one base (6) of the two-wheeler stand comprises at least two cavities.

## Revendications

1. Porte-bicyclettes comprenant au moins un pied (6) comprenant au moins une cavité (9), dans lequel si le pied (6) est mis en contact avec une surface, ladite au moins une cavité (9) formera au moins un espace vide avec la surface, une dépression pouvant être établie et allégée dans au moins un de ces espaces vides, **caractérisé en ce que** la réduction de la dépression et/ou l'établissement de la dépression demande une vérification, la vérification empêchant un établissement ou une réduction non autorisé(e) de la dépression.

2. Porte-bicyclettes selon la revendication 1, **caractérisé en ce que** le porte-bicyclettes est fixé à une bicyclette.

3. Porte-bicyclettes selon l'une des revendications 1 ou 2, **caractérisé en ce que** le porte-bicyclettes comprend un dispositif pour manuellement générer la dépression.

4. Porte-bicyclettes selon l'une des revendications 1 à 3, **caractérisé en ce que** la dépression est établie de manière automatique.

5. Porte-bicyclettes selon l'une des revendications 1 à 4, **caractérisé en ce que** la bicyclette est un vélo.

6. Porte-bicyclette selon la revendication 1 à la revendication 5, **caractérisé en ce que** l'au moins un pied (6) du porte-bicyclettes comprend au moins deux cavités.
